(19) **Europäisches Patentamt**

**European Patent Office**

**Office européen des brevets**

(11) **EP 1 496 371 A1**

(12) **EUROPEAN PATENT APPLICATION**

(43) Date of publication:
**12.01.2005 Bulletin 2005/02**

(51) Int Cl.$^7$: **G01S 13/30**, H03K 3/84, G01S 7/03

(21) Application number: **03254298.7**

(22) Date of filing: **07.07.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicants:<br> • **Mitsubishi Electric Information Technology Centre Europe B.V.**<br> **Guildford, Surrey GU2 7YD (GB)**<br> Designated Contracting States:<br> **GB**<br> • **MITSUBISHI DENKI KABUSHIKI KAISHA**<br> **Tokyo 100 (JP)**<br> Designated Contracting States:<br> **AT BE BG CH CY CZ DE DK EE ES FI FR GR HU IE IT LU MC NL PT SE SI SK TR RO LI** | (72) Inventor: **Szajnowski, Wieslaw Jerzy**<br> **Guildford, Surrey GU1 1AR (GB)**<br><br>(74) Representative: **Burke, Steven David et al**<br> **R.G.C. Jenkins & Co.**<br> **26 Caxton Street**<br> **London SW1H 0RJ (GB)** |

(54) **Generation of packets of waveforms**

(57)    The signals within a packet of transient signals are generated at timings corresponding to a binary pulse sequence having an autocorrelation function which, for all non-zero shifts, has a value which is substantially smaller than the maximum value at zero shift. The times of occurrence of the signals within a packet are such that the minimum gap between adjacent pulses in the corresponding binary pulse sequence exceeds a predetermined value, whereby the autocorrelation function of the binary pulse sequence exhibits a zero value for consecutive relative shifts which do not exceed a predetermined limit. Each transient signal may be a randomly-selected waveform with predetermined characteristics. At least one packet may be based on a composite sequence including a first binary pulse sequence interleaved with a second binary pulse sequence which is a time-reversed replica of the first binary pulse sequence, at least a substantial number of the transient signals corresponding to each binary pulse sequence being distinguishable from those corresponding to the other binary pulse sequence.

*FIG. 13*

**Description**

FIELD OF THE INVENTION

This invention relates to a method and apparatus for generating packets, or sequences, of waveforms, for example to be utilized in obstacle-detection systems and particularly, but not exclusively, in automotive blind-spot or pre-crash warning systems designed to operate in multiuser environments.

BACKGROUND OF THE INVENTION

One important type of automotive blind-spot or pre-crash warning system employs short pulses of electromagnetic or ultrasonic energy to interrogate the detection zone. A decision regarding the presence or absence of an obstacle at a predetermined range is then made by suitably processing energy backscattered by various objects in the field of view of the system.

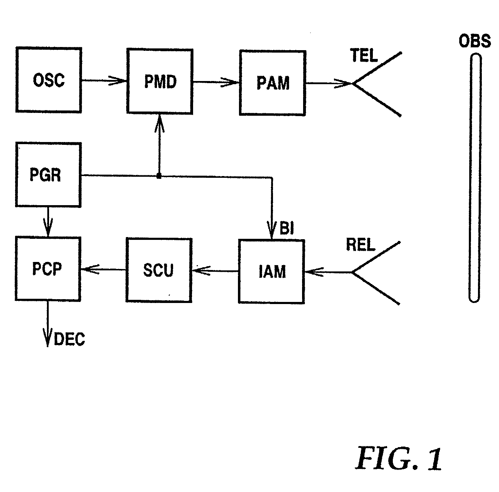

Fig. 1 is a block diagram of a typical obstacle-detection system utilizing short pulses of electromagnetic energy. The system comprises a pulse generator PGR that produces repetitively pulses with duration $T_P$ so selected as to provide a required range resolution $\Delta R$. The pulse repetition period $T_{REP}$ may be constant or may vary in some specified manner. The system also has an oscillator OSC that generates a sinusoidal signal with a required carrier frequency, a pulse modulator PMD that modulates the carrier signal in an on-off fashion, a power amplifier PAM that amplifies the pulsed carrier signal to a required level, a transmit element TEL that radiates pulses of electromagnetic energy towards an obstacle OBS, a suitable receive sensor REL that receives electromagnetic pulses reflected back by the obstacle OBS, an input amplifier IAM that amplifies the signal provided by the receive sensor REL, a signal conditioning unit SCU that employs suitable signal processing to shape the received pulses, and a pulse-coincidence processor PCP that processes jointly the reference pulses supplied by the generator PGR and reconstructed pulses supplied by the signal conditioning unit SCU to provide a decision DEC regarding the presence or absence of an obstacle at a predetermined range.

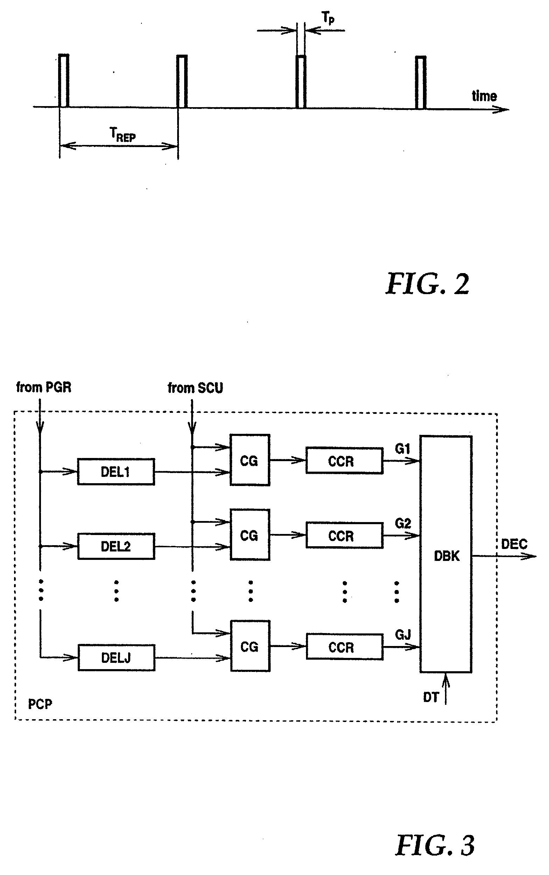

Fig. 2 depicts a periodic pulse train comprising rectangular pulses of duration $T_P$ and repetition period $T_{REP}$. The range resolution depends on the pulse duration $T_P$, and the unambiguous range of the system depends on the period duration $T_{REP}$.

In some applications, it is useful to blank the input amplifier IAM during pulse transmission intervals, in order to suppress an undesired leakage signal originating in the transmitter. The required blanking function is accomplished by applying pulses provided by the generator PGR to the blanking input BI of the amplifier IAM.

Fig. 3 is a block diagram of a multichannel pulse-coincidence processor PCP utilized by the obstacle-detection system of Fig. 1. The processor has a decision block DBK and a plurality of channels, each comprising a suitable delay unit DELN, a coincidence gate CG and a coincidence counter CCR. The plurality of delay values, DEL1, DEL2, ... , DELJ, corresponds to a plurality of range values of interest, referred to as range gates. In each channel, reference pulses provided by PGR are suitably delayed and applied to one input of CG, whose other input is driven by pulses reconstructed by signal conditioning unit SCU. When a pulse coincidence occurs, the counter CCR adds a one to the already accumulated number of coincidences. At the end of a prescribed observation period, each coincidence counter CCR supplies the number G of accumulated pulse coincidences to the decision block DBK.

When it is known (e.g., from geometric/physical considerations) that at most one obstacle may be present in the field of view of the system, the decision block DBK selects the greatest of the supplied numbers, G1, G2, ... , GJ, and compares this maximum value with a suitable decision threshold DT. If the decision threshold has been exceeded, then the DBK declares, at the output DEC, an obstacle present in the range gate that exhibits the greatest number of observed coincidences.

Alternatively, when multiple obstacles may be present in the field of view of the system, the decision block DBK compares all supplied numbers, G1, G2, ... , GJ, with a suitable decision threshold DT. If the decision threshold has been exceeded in some range gates, then the decision block DBK declares, at the output DEC, obstacles present in those range gates.

In some applications, especially when multiple obstacles are to be detected, an improved detection performance can be achieved by replacing in the pulse-coincidence processor PCP each coincidence gate (CG) and the associated coincidence counters (CCR) by an analogue-to-digital-converter followed by a digital accumulator. The resulting arrangement will become sensitive to the relative strength of backscattered pulses, thereby capable of providing a better detection performance. Such a modified version of the pulse coincidence processor (PCP) can be viewed as a multichannel parallel digital correlator.

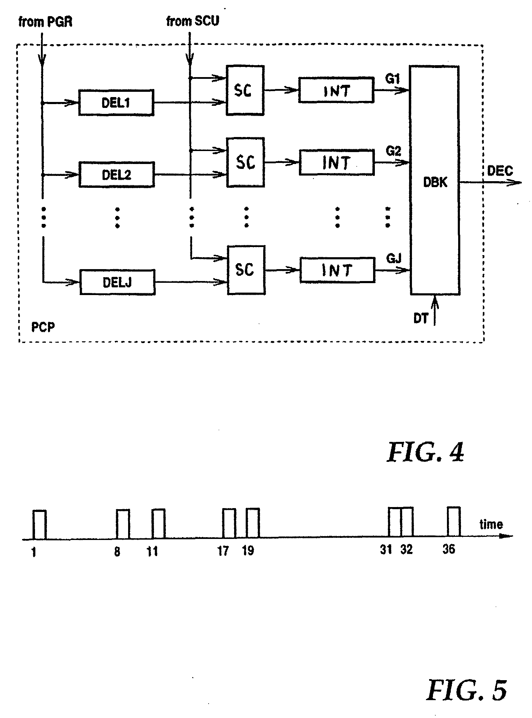

An important simplification of the modified PCP will be obtained by replacing each coincidence gate (CG) by an analogue sampling circuit (SC) and by implementing the accumulation operation (performed by a counter CCR or a digital accumulator) in an analogue fashion with the use of a suitable integrator (INT). Fig. 4 is a block diagram of such simplified system. Two basic forms of an analogue integrator, an integrate-and-dump circuit and a running-average integrator, are known to those skilled in the art.

It is known that object detectability can be improved significantly, when a single pulse is replaced by a suitably-constructed pulse packet. Consequently, a basic periodic pulse train, such as one depicted in Fig. 2, can be replaced by a sequence of successive pulse packets.

In this arrangement, each pulse packet comprises a specified number N of identical pulses which are staggered nonuniformly, with each interpulse spacing being an integer multiple of a suitably chosen unit time interval. The pattern of interpulse spacings is so designed as to ensure that only a small number $h_a$ of pulse coincidences (preferably at most one pulse coincidence) will occur between a primary pulse packet and its replica shifted in time by more than one pulse duration. This condition is usually referred to as the autocorrelation constraint.

Consider a pulse packet of span (length) L comprising N identical rectangular pulses of unit duration. Such a pulse packet can be conveniently represented by a binary sequence $\{x\} = x_1 x_2 ... x_L$ of symbols 0 and 1, in which symbol 1 corresponds to pulse occurrence. In this case, the autocorrelation constraint can be expressed as

$$R_{xx}(d) = \sum_{i=1}^{L-d} x_i x_i + d \leq h_a < N, \quad 0 < d \leq L - 1$$

where $R_{xx}(d)$ is the autocorrelation sequence and d is the integer shift. When d = 0, the autocorrelation value $R_{xx}(0)$ simply equals the number N of pulses contained within the pulse packet.

In the class of all pulse packets with a specified number of pulses N and $h_a = 1$, a maximally compact pulse packet has the minimal span $L_{min}$. Consequently, the maximally compact pulse packet exhibits the largest duty factor, N / L, hence the largest average power. For a fixed N and $h_a = 1$, all pulse packets with spans greater than $L_{min}$ are referred to as sparse pulse packets.

Fig. 5 depicts a pulse packet of span L = 36 comprising N = 8 pulses which are placed at locations 1, 8, 11, 17, 19, 31, 32 and 36. The pulse packet can be represented by the following binary sequence $\{x\}$

$$\{x\} = 100000010010000010100000000000110001$$

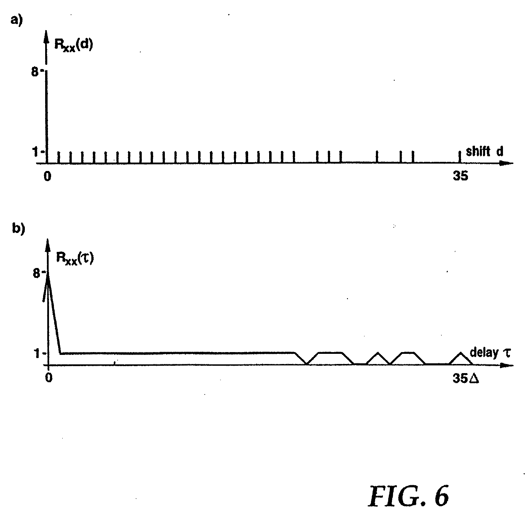

The autocorrelation sequence $R_{xx}(d)$ of $\{x\}$ is shown in Fig. 6(a). The peak value of $R_{xx}(d)$ occurs at zero shift and $R_{xx}(0) = 8$; for other shifts d, the function $R_{xx}(d)$ assumes values either zero or one ($h_a = 1$). While the autocorrelation sequence $R_{xx}(d)$ fully characterises the binary sequence $\{x\}$, the corresponding pulse packet is usually characterised by the autocorrelation function $R_{xx}(\tau)$, where the parameter $\tau$ denotes continuous time delay (shift). The autocorrelation function $R_{xx}(\tau)$ of the pulse packet represented by $\{x\}$ is shown in Fig. 6(b), where $\Delta$ denotes the unit time interval. Both the autocorrelation sequence $R_{xx}(d)$ and the autocorrelation function $R_{xx}(\tau)$ are even functions of their respective arguments.

The autocorrelation constraint ensures that when there is no noise or interference, and a multichannel pulse-coincidence processor is used for detecting a pulse packet, the output of each channel is at most $h_a$ except when the channel delay matches that of a pulse packet being received. In this case, the channel output reaches the peak value of N.

In practical systems, in order to suppress undesired leakage from the transmitter, the receiver is usually blanked during pulse transmission intervals. The autocorrelation constraint $R_{xx}(d) \leq 1$ implies that when the pulse packet being received overlaps the pulse packet being transmitted, at most one received pulse in a target return will be lost.

In a multiuser environment, the users may transmit their signals simultaneously and asynchronously so that not only must each receiver recognize and detect its own transmitted signal, but it must be able to do so in the presence of the other transmitted signals. Assume that a pulse packet to be detected by a receiver of interest is represented by a binary sequence

$$\{x\} = x_1 x_2 ... x_L$$

and that one of the interfering pulse packets is represented by another binary sequence

$$\{y\} = y_1 y_2 \cdots y_L$$

In order to optimize the detection performance of the receiver in multiuser environment, the following cross-correlation constraints must be satisfied for all integer shifts d

$$R_{xy}(d) = \sum_{i=1}^{L-d} x_i\, y_i + d \leq h_c < N, \quad 0 \leq d \leq L-1$$

and

$$R_{yx}(d) = \sum_{i=1}^{L-d} y_i\, x_i + d \leq h_c < N, \quad 0 \leq d \leq L-1$$

When more than one transmitter is in operation, the autocorrelation and cross-correlation constraints combined together ensure that when there is no noise and a multichannel pulse-coincidence processor is used for detection, the output of each channel is still substantially less than N except when the channel delay matches that of a received pulse packet of interest.

Various techniques have been developed to construct sets of binary sequences with good autocorrelation and cross-correlation properties (see for example, P. Fan and M. Darnell, *Sequence Design for Communications Applications.* Wiley, 1996). However, these are generally only of limited use in automotive obstacle-detection systems designated to operate in multiuser environment, as they would produce multiple different long sequences exhibiting a very low duty factor, hence the resulting detection performance will be significantly degraded.

In automotive applications, many similar obstacle-detection systems should be capable of operating in the same region, also sharing the same frequency band. To avoid mutual interference, each system should use a distinct signal, preferably uncorrelated with the signals employed by all other systems. Because it is not possible to predict which of the many similar systems will be operating in a particular environment, it is not practical to assign a distinct binary sequence to each of them. Furthermore, it is also very difficult to construct large sets of binary sequences with good autocorrelation and cross-correlation properties, and also exhibiting acceptable duty factors.

European Patent Application No. 02250394.0 (referred to herein as "the earlier application") discloses a method which exploits random mechanisms to generate large sets of composite pulse trains that can satisfy both autocorrelation and cross-correlation constraints. Consequently, resulting composite pulse trains will exhibit an excellent resistance to mutual jamming in multiuser environments.

According to the method disclosed in the earlier application, a composite pulse train consists of a sequence of primary pulse packets each of which is drawn at random from a predetermined set of suitably constructed primary pulse packets with prescribed autocorrelation and cross-correlation properties. The autocorrelation function of each primary pulse packet exhibits the property of 'at most one coincidence'. Also, the cross-correlation function between any two different pulse packets assumes small values compared to the maximum value of the corresponding autocorrelation functions.

For example, a primary pulse packet with desired autocorrelation properties can be used to construct another primary pulse packet with the same autocorrelation properties by reversing in time the first primary pulse packet. The cross-correlation function between these two dual primary pulse packets will not exceed values greater than two.

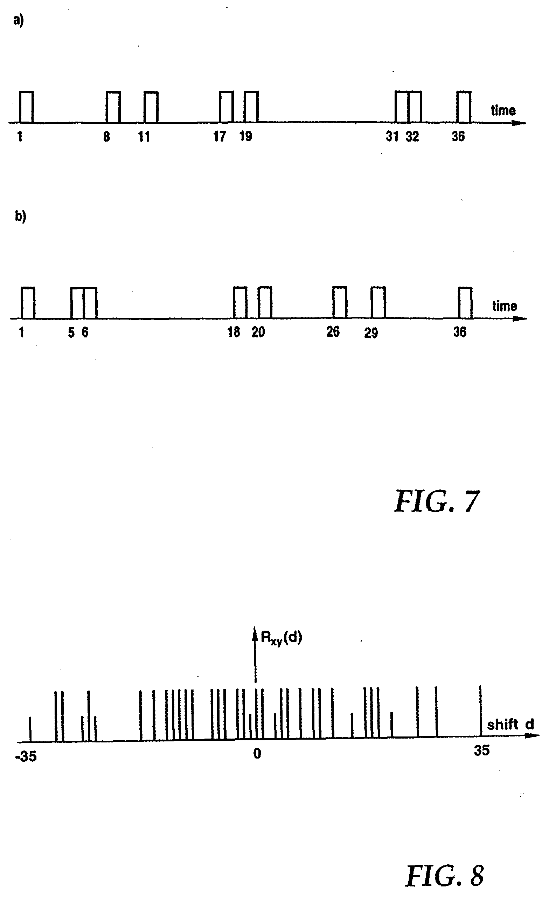

Fig. 7(a) shows an example of a primary pulse packet, and Fig. 7(b) shows another primary pulse packet, being a mirror image of the first packet. Fig. 8 depicts cross-correlation between two binary sequences that represent those two pulse packets. The cross-correlation function is asymmetric and it assumes, for different shifts, one of three values, 0, 1, or 2.

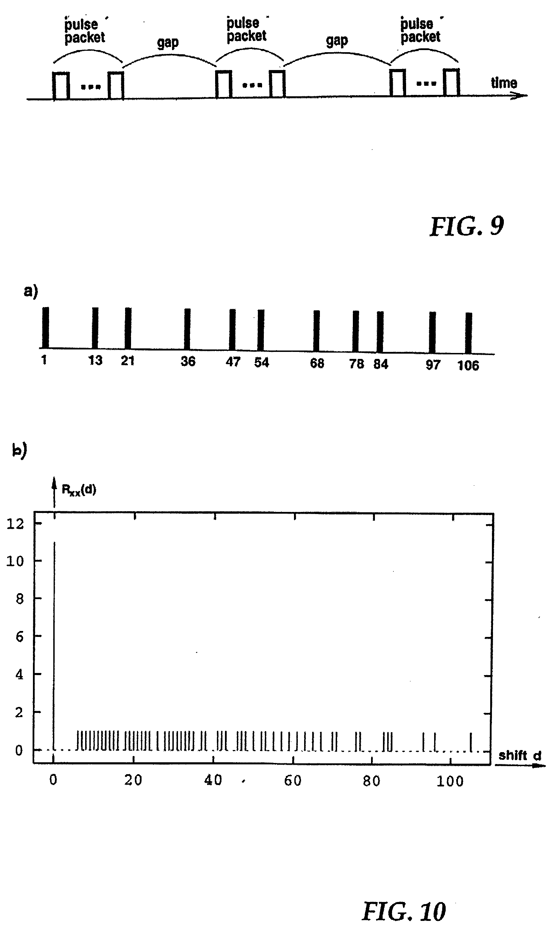

According to the method disclosed in the earlier application, the resistance to mutual jamming in multiuser environments can be further improved by separating individual primary pulse packets by gaps of random duration, the value of which may be determined by a random value supplied by a random number generator. Fig. 9 depicts the structure of such constructed composite pulse trains.

As a result, although each user may have the same set of primary pulse packets, a composite pulse train transmitted by each user is assembled in a random manner and is, therefore, statistically unique.

Although the method disclosed in the earlier application offers a practical solution to the problem of alleviating the mutual interference effects in a multiuser environment, the method is not capable of increasing the ratio **R** of the peak autocorrelation value, $R_{xx}(0) = N$, to the maximum (unit) autocorrelation sidelobe value. Increasing the value of **R** would improve the capability of the obstacle-detection system to detect and discriminate smaller obstacles (such as motorbikes) located in proximity of larger obstacles (such as trucks).

It would therefore be desirable to provide a method for generating a large number of pulse trains with good autocorrelation properties, good cross-correlation properties, and also improved capability to discriminate between smaller and larger obstacles, especially for applications in systems intended to operate in a multiuser environment.

DESCRIPTION OF THE INVENTION

Aspects of the present invention are set out in the accompanying claims.
According to a further aspect of the invention, a pulse packet is constructed in such a way as to satisfy the autocorrelation constraint modified as follows

$$R_{xx}(d) = \sum_{i=1}^{L-d} x_i\, x_i + d = 0, \quad 0 < d \le Z$$

$$R_{xx}(d) = \sum_{i=1}^{L-d} x_i\, x_i + d \le 1, \quad Z < d \le L-1$$

where the pulse packet is represented by a binary sequence $\{x_1\ x_2 \ldots x_L\}$ of symbols 0 and 1, in which symbol 1 corresponds to pulse occurrence.
The above constraint is more restrictive than the 'at most one coincidence' requirement, because for all consecutive delay values d = 1, 2, ..., Z, the autocorrelation sequence $R_{xx}(d)$ must equal zero. Therefore, the resulting autocorrelation sequence $R_{xx}(d)$ will exhibit a zero-correlation zone of span Z on either side of the main peak of value N at d = 0.
When the duration of a single pulse equals $\Delta$, the zero-correlation zone will correspond to the relative distance ZCD between obstacles equal to $Zc\Delta/2$, where c is the speed of interrogating pulses (c is the speed of light for electromagnetic pulses).
Consequently, an obstacle-detection system utilizing pulse packets satisfying the modified autocorrelation constraint will have an improved obstacle resolution, because the sidelobes of the autocorrelation function corresponding to a larger obstacle (such as truck) will no longer obscure the main autocorrelation peak associated with a smaller obstacle (such as motorbike) located within the relative distance ZCD from a larger obstacle.
From the modified autocorrelation constraint, it follows that in order to obtain the zero-correlation zone of span Z, the minimum difference between any two pulse positions in the pulse packet cannot be less than (Z+1).
In the case of a pulse packet comprising N pulses with the property 'at most one coincidence', the ratio **R** of the peak autocorrelation value $R_{xx}(0)$ to the *maximum* (unit) autocorrelation sidelobe value is always N. However, it would be extremely advantageous to obtain values of **R** greater than N, thus improving discrimination between large and small obstacles beyond the relative distance ZCD corresponding to the zero-correlation zone. Unfortunately, for a fixed number N of pulses in a packet, the value $\mathbf{R} \equiv N$ cannot be increased by any deterministic approach.
In accordance with another aspect of the invention, an average value of **R** exceeding N is obtained when each pulse of each pulse packet is replaced (substituted) by a waveform, drawn at random from a set comprising a finite number of suitably chosen waveforms of finite duration. Preferably, the waveforms should have the same duration and be mutually orthogonal (uncorrelated) to facilitate their discrimination in the receiver. The mechanism of representing a pulse by a randomly selected waveform may be viewed as some form of *random pulse mapping.*
When M orthogonal waveforms are utilized for pulse mapping, a single pulse packet containing N pulses may be represented by as many as $M^N$ waveform packets, all packets conveying the same time information, yet being different, hence distinguishable in the receiver.
The operation of random pulse mapping retains the time information contained in the pulse-to-pulse intervals, and random pulse mapping itself is equivalent to assigning to each pulse an index selected at random from a set of integers. Those indices may be represented in a physical system in a variety of different ways. Although some suitable formats of modulation, or waveform-for-pulse substitution, are currently regarded as preferable, other attributes of waveforms and wave phenomena (e.g., polarization of electromagnetic waves) can also be employed for 'watermarking' the interrogating pulses.
When no random mapping is applied to a pulse packet comprising N pulses with the property 'at most one coincidence', the ratio **R** of the peak autocorrelation value $R_{xx}(0)$ to the maximum (unit) autocorrelation sidelobe value is just N. However, when M orthogonal waveforms are utilized for random pulse mapping, the unit sidelobe value will, on average, be reduced to 1/M. This effect follows from the fact that the requirement of pulse coincidence 'in time' is now combined with the requirement of equality of indices (additional coincidence) assigned to individual pulses. As a result, the average value of the ratio **R** will be increased to NM, and an improved discrimination between large and small obstacles will be extended beyond the relative distance ZCD corresponding to the zero-correlation zone.

Combining the aspects mentioned above, i.e. the modified autocorrelation constraint (leading to an extended zero-correlation zone) and the statistical sidelobe reduction, obtained from random pulse mapping, results in the following set of packet properties:

1. autocorrelation peak N

$$R_{xx}(0) = \sum_{i=1}^{L} x_i^2 = N$$

2. zero-correlation zone

$$R_{xx}(d) = \sum_{i=1}^{L-d} x_i \, x_i + d = 0, \quad 0 < d \le Z$$

3. statistical sidelobe reduction via random pulse mapping

$$R_{xx}(d) = \sum_{i=1}^{L-d} x_i \, x_i + d \le 1/M < 1, \quad Z < d \le L - 1$$

where the statistical bound 1/M on the sidelobe values can be satisfied in the long run' or 'on average'. Since in practical applications a decision regarding the presence or absence of an obstacle at a given range is based on several thousand pulse packets, the bound 1/M is effectively achievable.

It will be appreciated from the foregoing that it is possible to produce packets of transient signals with advantageous characteristics by (a) using random pulse mapping of the individual transient signals so that they are distinguishable (as distinct from being identical pulses), and/or (b) choosing the timing of the individual transient signals so that they correspond to an underlying binary pulse sequence with good autocorrelation properties.

Random pulse mapping, even if used on its own, provides an excellent resistance to mutual jamming in a multiuser environment. By construction, although each user may employ repeatedly the same transient signal packet, the corresponding sequence of waveforms is assembled in a random manner by each user and is, therefore, statistically unique. The resistance to mutual jamming in a multiuser environment can be further improved by inserting random gaps between individual packets in accordance with the method described above and disclosed in the earlier application. The techniques disclosed in GB-A-2357610 could be used to determine the durations of the gaps.

In some obstacle-detection systems, the peak power of transmitted transient signals is limited and cannot be increased, yet attaining reliable detection coupled with high range resolution is of primary importance. In such cases, a set of orthogonal waveforms used for random pulse coding should contain waveforms which can be compressed in the receiver, and their duration on transmit could be increased up to $(Z+1)\Delta$, where $Z\Delta$ is the shortest interval between primary signals in a packet. The use of 'compressible' waveforms for random pulse mapping will increase the resulting duty factor, by a factor of up to $(Z+1)$, which otherwise may be too low for intended applications.

A broad class of compressible waveforms include transient signals with linear frequency modulation, commonly referred to as LFM, or 'chirp', pulses, and other waveforms known to those skilled in the art.

According to a still further aspect of the invention, a packet with a larger duty factor may be formed by basing the packet on an underlying binary pulse sequence formed by suitably interleaving a primary pulse packet and its time-reversed ('mirror') replica. In such a case, preferably, one set of waveforms will be employed for mapping a primary pulse packet, and another set of waveforms will be used for mapping the 'mirror' replica of the packet. Preferably, the two sets of waveforms are mutually exclusive, i.e., no waveform may belong to both the sets. As a simple example, the waveforms used for the primary packet may have a first frequency, and those for the mirror replica may have a second frequency. It is preferred, however, for each packet to comprise several different waveforms.

In a preferred embodiment of the invention, some, and preferably all, of these aspects are combined to provide a substantially improved discrimination between multiple small and large obstacles present in a multiuser environment.

DESCRIPTION OF THE DRAWINGS

An arrangement embodying the invention will now be described by way of example with reference to the accompanying drawings, in which:

Fig.1 is a block diagram of a typical obstacle-detection system utilizing short pulses of electromagnetic energy;
Fig.2 depicts a periodic pulse train comprising rectangular pulses of duration $T_P$ and repetition period $T_{REP}$;
Fig.3 is a block diagram of a multichannel pulse-coincidence processor utilized by the obstacle-detection system of Fig.1;
Fig.4 is a block diagram of a simplified analogue multichannel pulse-coincidence correlator;
Fig.5 depicts a pulse packet;
Fig.6(a) depicts the autocorrelation sequence $R_{xx}(d)$ of a binary sequence corresponding to the pulse packet of Fig. 5;
Fig. 6(b) depicts the autocorrelation function $R_{xx}(\tau)$ of the pulse packet of Fig. 5;
Fig.7(a) is an example of a primary pulse packet;
Fig.7(b) depicts another primary pulse packet obtained by time reversal of the packet shown in Fig. 7(a);
Fig. 8 shows the cross-correlation sequence between two binary sequences being mirror images of one another;
Fig.9 depicts the structure of a composite pulse train;
Fig.10(a) is an example of another pulse packet;
Fig.10(b) depicts the autocorrelation sequence of a binary sequence representing the pulse packet of Fig. 10(a);
Fig.1 illustrates the principle of random pulse mapping;

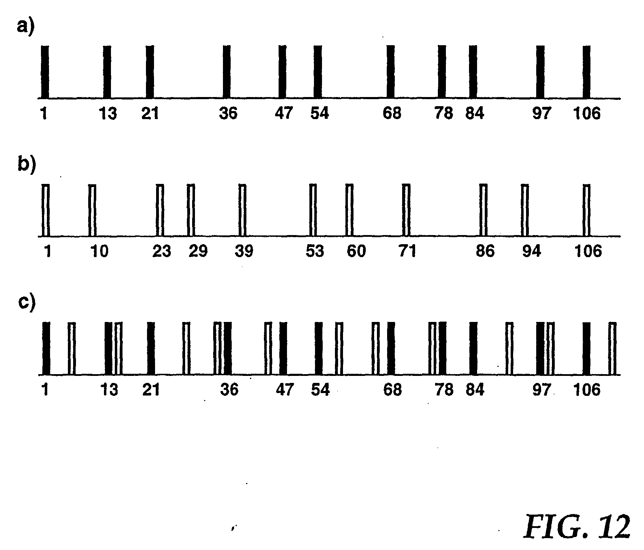

Fig.12 is an example of a pulse packet with increased duty factor;

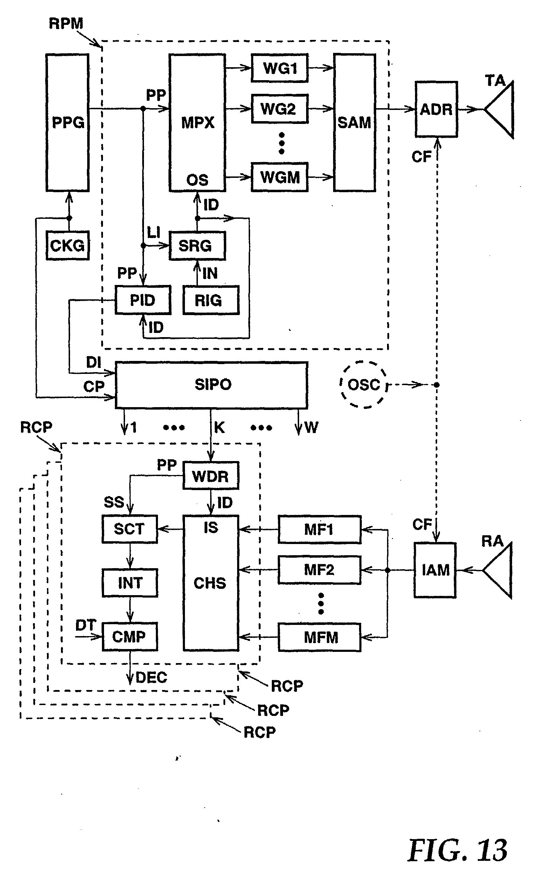

Fig.13 is a block diagram of an obstacle-detection system incorporating a random pulse mapper arranged to operate in accordance with the present invention;

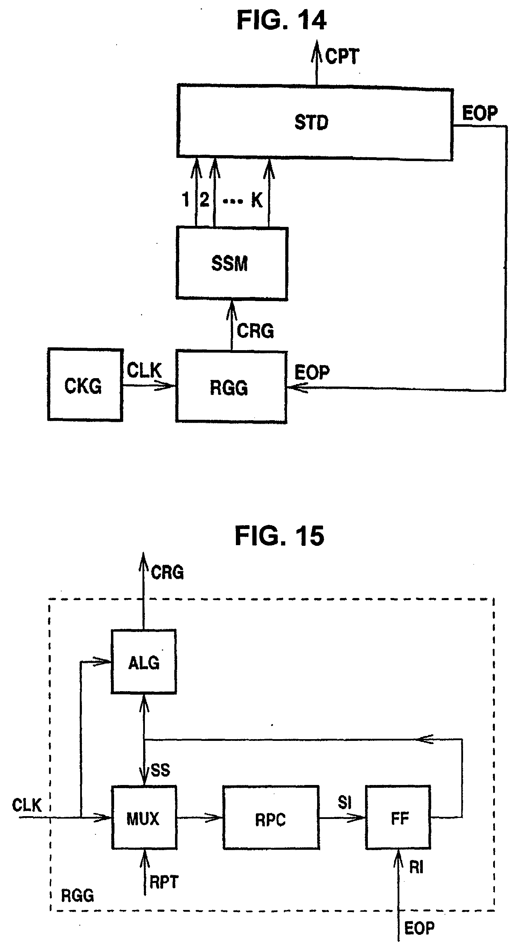

Fig. 14 is a block diagram of a pulse packet generator of the system of Fig. 13; and
Fig. 15 is a block diagram of a random gap generator for the pulse packet generator of Fig. 14.

DESCRIPTION OF A PREFERRED EMBODIMENT

Fig. 10(a) shows an example of a primary pulse packet which could be used in an obstacle detection system according to the present invention. The packet comprising 11 pulses distributed within 106 positions; the minimum difference between pulse positions in the packet is equal to 6 (positions 78 and 84). Fig. 10(b) depicts the autocorrelation sequence of the packet. The packet satisfies the modified autocorrelation constraint mentioned above. In accordance with the packet construction, the zero-correlation zone has a span of 5.
Preferably, randomly selected waveforms are substituted for the individual pulses. In the simplest arrangement, the duration of each waveform used for random pulse mapping equals $\Delta$, i.e., the duration of each primary pulse.

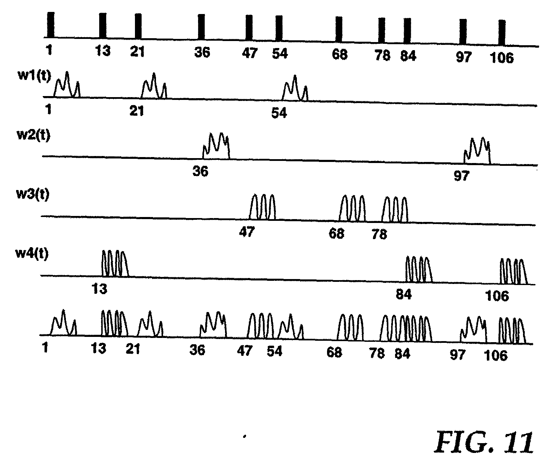

Fig. 11 illustrates a primary pulse packet (the same as already shown in Fig.10(a)) and a resulting waveform packet obtained by selecting one of four available waveforms, w1(t), w2(t), w3(t) and w4(t), indexed by numbers 1, 2, 3 and 4. In this case, the waveforms are significantly longer than the pulses of the basic pulse packet. For illustrative purposes, it is assumed that a random mechanism employed for waveform selection has produced the following sequence of numbers: 1, 4, 1, 2, 3, 1, 3, 3, 4, 2, 4. As seen, the primary pulse packet and the resulting waveform packet, being aligned in time, both contain the same time information.
In order to improve the duty factor, the basic pulse packet can be modified. As an illustrative example, Fig. 12(a) shows the primary pulse packet of Fig. 10(a), Fig. 12(b) shows a 'mirror' replica of the packet, and Fig. 12(c) depicts a pulse packet resulting from interleaving the primary packet with a time-shifted 'mirror' replica of the packet. Again, in practice, waveforms can be used in place of the discrete pulses. As indicated above, it is important for at least a substantial number of the transient signals of each packet to be distinguishable from those of the other packet (and desirable for them to be distinguishable from each other).
The duty factor of a pulse packet can be increased even more, if a supplementary packet (or packets) with the property 'at most one coincidence' is inserted into the combination of a primary packet and its 'mirror' replica. However, more waveforms will be required for random mapping of pulses belonging to all interleaved packets.
Fig. 13 is a block diagram of an obstacle-detection system incorporating a random pulse mapper RPM and arranged to operate in accordance with the present invention. The system also comprises a pulse packet generator PPG, driven by a clock generator CKG, an antenna driver ADR coupled to a suitable transmit antenna TA, a serial-in-parallel-out shift register SIPO, a suitable receive antenna RA connected to an input amplifier IAM, a bank of M matched filters, MF1, MF2, ... , MFM, and a plurality of range-cell processors RCPs. As will be explained later, the system may also incorporate an oscillator OSC supplying a sinusoidal signal at a suitable carrier frequency to both ADR and IAM.

The pulse packet generator PPG supplies repeatedly pulses to the random pulse mapper RPM, and more specifically to: input PP of a multiplexer MPX, load input LI of a storage register SRG, and input PP of a pulse identifier PID. Each pulse supplied by the generator PPG triggers one out of M waveforms generators, WG1, WG2, ... , WGM, in response to the value of a number generated by a random index generator RIG. This value is loaded via input IN to a storage shift register SRG prior to the time instant of each pulse occurrence.

Preferably, waveforms w1(t), w2(t), ... , wM(t) to be supplied by the M waveforms generators WG1, WG2, ... , WGM should be mutually orthogonal to facilitate the discrimination of signals reflected back by obstacles. In particular, a suitable set of waveforms can be produced by using short segments of sinewaves, each with substantially different frequency. In this specific case, the bank of matched filters will comprise band-pass filters, each with a centre frequency equal to the frequency of a respective sinewave, and with the bandwidth inversely proportional to the duration of the sinewave segment.

Short segments of sinewaves can readily be generated by suitably modified ringing or blocking oscillators. Another method, disclosed in US-A- 3,612,899 (incorporated herein by reference), enables forming very narrow pulses of electromagnetic energy directly at microwave carrier frequency.

The value of a random index ID held at input OS of multiplexer MPX determines a specific path for each pulse to trigger the respective waveform generator corresponding to that index value. For example, when the index value is 2, waveform generator WG2 will be triggered to produce a suitable waveform w2(t), which (via a summing amplifier SAM and driver ADR coupled to antenna TA) will be sent as an interrogating signal towards obstacles.

When waveforms produced by the waveform generators WG1, WG2, ... , WGM, are generated at a suitable carrier frequency (or frequencies), they can (after suitable conditioning and, if required, amplification in driver ADR) be sent directly by antenna TA as interrogating signals. However, when the waveform generators, WG1, WG2, ..., WGM, can supply only baseband versions of waveforms, some form of 'upconverting' (modulation) will be required prior to delivering those waveforms to the transmit antenna TA. In such a case, the antenna driver ADR will incorporate a suitable modulator utilizing a sinusoidal reference signal at a carrier frequency, provided by the auxiliary oscillator OSC, and applied via input CF to the driver ADR.

For each pulse provided by generator PPG, the pulse identifier PID combines a random index ID, assigned to that pulse (by the random index generator RIG), with timing information (supplied via input PP) regarding the pulse occurrence. The resulting combination may be represented by a binary word; for example, the most significant bit (MSB) equal 1 may mark the pulse occurrence, whereas the remaining bits may represent the value of the random index ID assigned to that pulse.

Binary words thus created are applied via input DI to register SIPO; the words are shifted into register SIPO at the time instants determined by clock pulses appearing at input CP of the register SIPO. As a result, each pulse supplied by the pulse packet generator PPG is represented by a respective binary word in a unique way: the time of pulse occurrence has been imparted on a corresponding time slot (i.e. clock period) by setting MSB to 1, whereas the random index ID has been used to determine the values of the remaining bits of the binary word.

The register SIPO acts as a digital discrete-time delay line with total delay (expressed in units of clock period) equal to the number of used storage cells, i.e. W in the arrangement shown in Fig. 13. Consequently, the register SIPO stores and retains the continually updated information regarding all primary pulses generated and mapped during the last W clock periods. This information is made available at W parallel outputs of the register SIPO; either all or only selected register SIPO outputs are connected to respective range-cell processors RCPs. For illustrative purposes, Fig. 13 shows output K of the register SIPO connected to a corresponding processor RCP.

A signal reflected back by an obstacle and received via the receive antenna RA is applied to the input amplifier IAM. When the matched filters, MF1, MF2, ..., MFM, are capable of processing only the baseband versions of waveforms w1(t), w2(t), ... , wM(t), some means for 'downconverting' (demodulation) will have to be incorporated into the amplifier IAM. Accordingly, a sinusoidal reference signal at a suitable frequency can be provided by the auxiliary oscillator OSC coupled to input CF of the amplifier IAM.

The bank of M matched filters, MF1, MF2, ..., MFM, is constructed to operate as follows. When any of the utilized waveforms, w1(t), w2(t), ... , wM(t), is applied to the common input of the matched filters, only the filter matched to this particular waveform will produce an unequivocal response; the residual responses of all remaining matched filters will be negligible. This specific property of the bank of matched filters is exploited to reliably recover from a received signal the value of a random index ID, assigned to each underlying pulse, during random pulse mapping.

The functions and operations performed by each range-cell processor RCP can be summarised as follows:

1. Each binary word supplied by a respective output of register SIPO is decomposed in a word decoder WDR into a signal PP indicating the pulse occurrence and a random index ID assigned to that pulse by the random index generator RIG during random pulse mapping.

2. The signal PP is applied to sampling input SS of a sampling circuit SCT, whereas the random index ID selects, via input IS of a channel selector CHS, the output of a matched filter corresponding to that index. Depending on the implementation, each matched filter may provide at its output either a multilevel (e.g., analogue) signal, indicative of the strength of a received waveform, or just a binary signal, indicative of whether or not the strength of a received waveform is substantially greater than that of background noise and/or interference.

3. The thus-selected output of a respective matched filter is applied to the sampling circuit SCT and then sampled at the time instant coincident with the signal PP appearing at input SS. When a matched filter produces at its output a binary signal, the sampling circuit SCT can be reduced to a simple logic gate. It will, incidentally, be noted that the duration of the filter output will be dependent on the received waveform and the filter characteristics. The use of relatively long waveforms is acceptable if the characteristics are such that the filter output has a suitable duration.

4. The output of SCT is fed to an integrator INT which may be of integrate-and-dump' type, or 'running-average' ('moving-window') type. When the sampling circuit SCT is replaced by a logic gate, a suitably configured pulse counter can also perform the required integration.

5. The resultant level reached by the integrator INT is compared to a predetermined decision threshold DT in a comparator CMP. If the decision threshold DT has been exceeded, the presence of an obstacle will be declared in the range cell corresponding to the delay of the register SIPO output connected to the respective range-cell processor RCP.

As seen, the main function performed jointly by the processor RCP and the bank of matched filters is that of a waveform 'de-mapper' combined with that of a conventional correlation receiver. As a result, the decision outputs of all processors RCPs provide a comprehensive picture of potential obstacles present in range cells constituting the field of view (FOV) of an obstacle-detection system. This 'snapshot' information can be utilized by a suitable obstacle-tracking system to produce warning signals to alert the driver, and also other signals used to initiate the operation of intended pre-crash actuators, such as air bags, brakes, etc.

Fig. 14 is a block diagram of one possible structure of the pulse packet generator PPG. The generator comprises a sequential state module SSM, a state decoder STD, a random gap generator RGG and a clock generator CKG.

During the system operation, the sequential state module SSM changes its state successively at the time instants determined by clock pulses CLK supplied by the clock generator CKG. The total number NS of distinct states of the sequential state module SSM should be at least equal to the span $L_{max}$ of the longest primary pulse packet used by the system; hence

$$NS = 2^K \geq L_{max}$$

where K is the number of flip-flops utilized by the sequential state module SSM. Redundant states of the sequential state module SSM may be employed for generating a regular gap, and the remaining states, if any, should be eliminated. If the number (NS - $L_{max}$) of redundant states is too small to generate a complete regular gap, the remaining part of the gap, or even the whole regular gap, can additionally be supplied by the random gap generator RGG.

The sequential state module SSM is arranged to operate cyclically, each cycle comprising NU distinct states selected in some convenient manner from the total number NS = $2^K$ of available distinct states. Among those NU distinct states, there are N predetermined states representing the positions of pulses in each pulse packet to be generated.

The function of the sequential state module SSM can be implemented by a conventional binary counter, by a shift register with a suitable feedback or by a similar sequential state machine well known to those skilled in the art.

The state decoder STD is driven by a K-bit output of the sequential state module SSM. The state decoder STD has two outputs: one output supplies a composite pulse train CPT, whereas the other produces an end-of-packet EOP pulse. For example, an EOP pulse may coincide with the trailing pulse of every pulse packet. The EOP pulse is utilized to initiate operations performed by the random gap generator RGG.

All functions of the state decoder STD can be implemented by a combinational logic or by a suitably programmed read-only memory.

The random gap generator RGG appends a random gap to the trailing pulse of every primary pulse packet being produced. Each cycle of the repetitive operation of the random gap generator RGG is initiated by an EOP pulse supplied by the state decoder STD. The random gap is inserted by inhibiting a random number of clock pulses provided by the clock generator CKG. The output CRG of the random gap generator RGG supplies a sequence of clock pulses in which a random number of consecutive pulses are missing. As a result, the operation of the sequential state module SSM is suspended during a random time interval equal to the duration of the random gap. Preferably, the duration of each random gap is uniformly distributed, and the random gaps are formed independently of each other. If required, the random gap generator RGG can also supply a fraction of a regular gap or even a complete regular gap.

Fig. 15 is a block diagram of a random gap generator RGG. The random gap generator RGG comprises a random pulse counter RPC, a two-input multiplexer MUX, a flip-flop FF and an AND logic gate ALG. The random gap generator RGG utilizes a random pulse train RPT with a sufficiently high pulse rate. A suitable device for providing the random pulse train RPT will be evident to the skilled man.

The random pulse counter RPC capacity is determined by the assumed largest value of a random gap. The random pulse counter RPC capacity should be small compared to the total number of random pulses supplied by the random pulse train RPT during one cycle of the sequential state module SSM. As a result, the random pulse counter RPC will overflow a large number of times during each sequential state module SSM cycle, and only the fractional part of the total number of applied random pulses will be retained in the random pulse counter RPC at the time instants coinciding with EOP pulses. This fractional part is distributed uniformly over all counter states, irrespective of the underlying statistics of random pulses occurring in a random pulse train RPT.

The multiplexer MUX operates as follows: when the binary source select input SS=1, the random pulse counter RPC receives a random pulse train RPT, and when SS=0, the random pulse counter RPC receives clock pulses CLK.

Prior to the occurrence of an end-of-packet EOP pulse, the flip-flop FF is in state '1' (hence, also SS=1), clock pulses appear at the output of the AND gate ALG, and the random pulse train RPT is applied to the random pulse counter RPC via the multiplexer MUX. As soon as an EOP pulse is applied to the reset input RI of the flip-flop FF, the flip-flop FF will assume state '0' and no clock pulses CLK will appear at the output of the AND gate ALG. Because the flip-flop FF also drives the SS input of the multiplexer MUX, now SS=0 and clock pulses CLK are applied to the random pulse counter RPC via the multiplexer MUX. The number of clock pulses required to bring the random pulse counter RPC from its initial random state to the overflow state is a random and uniformly distributed number.

As soon as the overflow occurs, a suitable signal is applied to the set input SI of the flip-flop FF, and the flip-flop FF assumes state '1'. Because now SS=1, the random pulse counter RPC will resume counting (with overflow) random pulses in the random pulse train RPT, and clock pulses CLK will appear again at the output of the AND gate ALG.

The above procedure results in inserting a random gap into a sequence of clock pulses appearing at the output of the AND gate ALG. The duration of the random gap is equal to the random number of clock pulses CLK required to make the random pulse counter RPC overflow. Therefore, the duration of the random gate has a uniform distribution.

The specific overflow condition due to counting clock pulses CLK forces the random pulse counter RPC to assume an initial state '0', before the random pulse counter RPC restarts counting random pulses in the random pulse train RPT. Because of a large number of overflows resulting from counting random pulses, the random states of the random pulse counter RPC are assumed to be statistically independent at the time instants determined by the occurrence of end-of-packet EOP pulses.

The arrangement described above repeatedly produces pulse packets of finite length, and a mapping process is used to substitute waveforms for the individual pulses. Various modifications are possible.

For example, the waveforms could be produced directly, at the required timings, without needing to generate pulses first. (It would nevertheless be possible to deduce for each packet a nominal binary pulse train, and its autocorrelation function, corresponding to the timing of the waveform generation.)

Instead of using distinguishable waveforms of preferably finite, limited duration, the transient signals could be formed by respective sub-sequences of pulses, distinguishable by the timing of the pulses within each sub-sequence.

The obstacle detection system of Fig. 13 may be mounted on a movable platform (such as a vehicle or vessel), or on a stationary platform to detect the approach of a movable object. The system can be a collision-warning system arranged to generate a warning signal in response to detection of an object. Additionally or alternatively, the system may be a ranging aid having means, such as the arrangement of Fig. 3 or Fig. 4, for detecting the range of an obstacle and for generating a signal indicative of the range.

It is desirable for the packets of transient signals generated by multiple systems to satisfy the cross-correlation constraint mentioned above, and in particular for the cross-correlation functions to have values which are all small compared with the maximum values of each autocorrelation function. Furthermore, because of the desirability for each system to have the same structure, it is preferable for these conditions to apply to the cross-correlation properties of different packets produced by an individual system. This, however, can be achieved by virtue of the techniques described above, particularly the provision of pulse mapping, random intervals between packets and timing sequences selected to have good correlation properties.

It will be clear from the above description that references to the form of transient signals (e.g. single pulses or waveforms) are intended to relate to the baseband form of those signals; clearly the detailed structure of transmitted waveforms may differ if the transient signals are used for carrier modulation for transmission.

The term "random" is intended herein to include, without limitation, not only purely random, non-deterministically generated signals, but also pseudo-random and/or deterministic signals such as the output of a shift register arrangement provided with a feedback circuit as used in the prior art to generate pseudo-random binary signals, and chaotic signals.

The embodiments described herein can be implemented using dedicated hardware, incorporating for example digital signal processors, or using suitably-programmed general-purpose computers.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

**Claims**

1. A method of generating packets of transient signals, the signals within each signal packet being generated at timings corresponding to a binary pulse sequence having an autocorrelation function which, for all non-zero shifts, has a value which is substantially smaller than the maximum value at zero shift;
   the method involving ensuring that the times of occurrence of the signals within a packet are such that the minimum gap between adjacent pulses in the corresponding binary pulse sequence exceeds a predetermined value, whereby the autocorrelation function of the binary pulse sequence exhibits a zero value for consecutive relative shifts which do not exceed a predetermined limit.

2. A method as claimed in claim 1, wherein each transient signal is a single pulse.

3. A method as claimed in claim 1, wherein each transient signal is a finite pulse train.

4. A method as claimed in claim 1, wherein each transient signal is a waveform with predetermined characteristics.

5. A method of generating packets of transient signals, the signals within each signal packet being generated at timings corresponding to a binary pulse sequence having an autocorrelation function which, for all non-zero shifts, has a value which is substantially smaller than the maximum value at zero shift;
   wherein each transient signal is a waveform with predetermined characteristics.

6. A method as claimed in claim 4 or 5, including the step of randomly selecting the transient waveform from a set of waveforms of different characteristics.

7. A method as claimed in claim 6, in which each transient waveform of a packet thereof is individually randomly selected.

8. A method as claimed in claim 6 or 7, in which the waveforms of said set are substantially mutually orthogonal.

9. A method as claimed in any preceding claim, in which a transient signal packet includes signals at timings corresponding to a composite sequence including a first binary pulse sequence interleaved with a second binary pulse sequence which is a time-reversed replica of the first binary pulse sequence, at least a substantial number of the transient signals corresponding to each binary pulse sequence being distinguishable from those corresponding to the other binary pulse sequence.

10. A method of generating packets of transient signals, the signals within each packet being generated at timings corresponding to a binary pulse sequence having an autocorrelation function which, for all non-zero shifts, has a value which is substantially smaller than the maximum value at zero shift;
    wherein at least one transient signal packet is based on a composite sequence including a first binary pulse sequence interleaved with a second binary pulse sequence which is a time-reversed replica of the first binary pulse sequence, at least a substantial number of the transient signals corresponding to each binary pulse sequence being distinguishable from those corresponding to the other binary pulse sequence.

11. Apparatus for generating packets of transient signals, the apparatus being arranged to operate in accordance with a method as claimed in any preceding claim.

**12.** Obstacle detection apparatus for use in a multi-user environment comprising apparatus as claimed in claim 11 for generating packets of transient signals, means for transmitting said transient signals, receiving means for receiving reflections of the transmitted transient signals, and processing means for correlating the transmitted signals with the received signals in order to detect the presence or absence of obstacles.

**13.** Obstacle detection apparatus as claimed in claim 12, including means for providing a signal indicative of the range of a detected object.

**14.** Obstacle detection apparatus as claimed in claim 12 or 13 for use in a vehicle or vessel to detect potential collisions.

**15.** A collision-warning system for a vehicle or vessel, the system comprising an obstacle detection apparatus as claimed in claim 14 and means for generating a warning signal in response to obstacle detection.

**16.** A ranging aid for a vehicle or vessel, the system comprising an obstacle detection apparatus as claimed in claim 14 and means for generating a signal indicative of the range of a detected obstacle.

*FIG. 1*

FIG. 2

FIG. 3

*FIG. 4*

*FIG. 5*

a)

$R_{xx}(d)$

8

1

0

shift d

35

b)

$R_{xx}(\tau)$

8

1

0

delay $\tau$

35$\Delta$

*FIG. 6*

a)

b)

FIG. 7

FIG. 8

FIG. 9

FIG. 10

*FIG. 11*

a)

| | | | | | | | | | | | |
1     13  21      36      47  54      68      78 84      97  106

b)

| | | | | | | | | | | |
1     10      23  29  39          53  60  71          86  94      106

c)

1     13  21      36      47  54      68      78 84      97   106

FIG. 12

*FIG. 13*

# FIG. 14

# FIG. 15

**European Patent Office**

**EUROPEAN SEARCH REPORT**

Application Number

EP 03 25 4298

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 935 694 A (STANDARD TELEPHONES CABLES LTD) 4 September 1963 (1963-09-04) * page 1, line 52 - page 2, line 89; figures 1-4 * | 5,8, 11-16 | G01S13/30 H03K3/84 G01S7/03 |
| Y | | 1-4,6,7, 9,10 | |
| X | US 3 475 558 A (CAHN CHARLES R) 28 October 1969 (1969-10-28) * column 4, line 11 - column 5, line 67; figures 1-8 * | 5,8, 11-16 | |
| Y | | 1-4,6,7, 9,10 | |
| Y | WO 00 79299 A (HOLLANDSE SIGNAALAPPARATEN BV ;DEDDEN GERRIT (NL)) 28 December 2000 (2000-12-28) * page 5, line 1 - page 6, line 12; figures 1-4 * | 1-4 | |
| Y | BADEN J M ET AL: "Optimal sidelobe suppression for biphase codes" PROCEEDINGS OF THE NATIONAL TELESYSTEMS CONFERENCE. ATLANTA, MARCH 26 - 27, 1991, NEW YORK, IEEE, US, vol. 1, 26 March 1991 (1991-03-26), pages 127-131, XP010047015 ISBN: 0-7803-0062-9 * page 128, paragraph 5 - page 129, paragraph 6; figure 5 * | 1-4 | TECHNICAL FIELDS SEARCHED (Int.Cl.7) G01S H03K H04J |

-/--

The present search report has been drawn up for all claims

| Place of search | Date of completion of the search | Examiner |
|---|---|---|
| MUNICH | 31 March 2004 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 25 4298

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | SPANO E ET AL: "COMPLEMENTARY SEQUENCES WITH HIGH SIDELOBE SUPPRESSION FACTORS FOR ST/MST RADAR APPLICATIONS" IEEE TRANSACTIONS ON GEOSCIENCE AND REMOTE SENSING, IEEE INC. NEW YORK, US, vol. 34, no. 2, 1 March 1996 (1996-03-01), pages 317-329, XP000598139 ISSN: 0196-2892 * page 328 - page 329 * | 9,10 | |
| A | GB 1 445 572 A (SECR DEFENCE) 11 August 1976 (1976-08-11) * page 2, line 48-52; figures 1,2 * | 1-16 | |
| A | US 5 847 677 A (MCCORKLE JOHN W) 8 December 1998 (1998-12-08) * the whole document * | 1-16 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 31 March 2004 | Fanjul Caudevilla, J |

EPO FORM 1503 03.82 (P04C01)

European Patent
Office

**Application Number**

EP 03 25 4298

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION SHEET B**

**Application Number**

EP 03 25 4298

The Search Division considers that the present European patent application does not comply with the requirements of unity of invention and relates to several inventions or groups of inventions, namely:

1. Claims: 1-3

    Method of generating sequences of transient signals wherein the autocorrelation function of the sequence has a zero value for consecutive relative shifts.

2. Claims: 4-8

    Method of generating sequences of transient signals wherein each transient signal is a waveform with predetermined characteristics.

3. Claims: 9-10

    Method of generating sequences of transient signals by including a first binary sequence interleaved with its time-reversed replica.

## ANNEX TO THE EUROPEAN SEARCH REPORT
## ON EUROPEAN PATENT APPLICATION NO.

EP 03 25 4298

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2004

| Patent document cited in search report | | Publication date | Patent family member(s) | | Publication date |
|---|---|---|---|---|---|
| GB 935694 | A | 04-09-1963 | NONE | | |
| US 3475558 | A | 28-10-1969 | NONE | | |
| WO 0079299 | A | 28-12-2000 | NL | 1012373 C2 | 19-12-2000 |
| | | | AU | 5678400 A | 09-01-2001 |
| | | | CA | 2375270 A1 | 28-12-2000 |
| | | | WO | 0079299 A1 | 28-12-2000 |
| | | | EP | 1185882 A1 | 13-03-2002 |
| | | | JP | 2003502675 T | 21-01-2003 |
| | | | TR | 200103622 T2 | 22-04-2002 |
| GB 1445572 | A | 11-08-1976 | NONE | | |
| US 5847677 | A | 08-12-1998 | NONE | | |

EPO FORM P0459

For more details about this annex : see Official Journal of the European Patent Office, No. 12/82